# EUROPÄISCHE PATENTSCHRIFT

(11) **EP 2 956 833 B1**
(45) Veröffentlichungstag und Bekanntmachung des Hinweises auf die Patenterteilung: **10.08.2022**
(21) Anmeldenummer: 14704133.9
(22) Anmeldetag: 11.02.2014
(51) Int. Cl.: G05D 1/00

(54) **VERFAHREN UND VORRICHTUNG ZUR DARSTELLUNG VON INFORMATIONEN EINES SYSTEMS**
METHOD AND DEVICE FOR DISPLAYING INFORMATION OF A SYSTEM
PROCÉDÉ ET DISPOSITIF POUR REPRÉSENTER DES INFORMATIONS D'UN SYSTÈME

(30) Priorität: 13.02.2013 DE 102013002533
(43) Veröffentlichungstag der Anmeldung: 23.12.2015
(73) Patentinhaber: Volkswagen Aktiengesellschaft, 38440 Wolfsburg (DE); Audi AG, 85045 Ingolstadt (DE); Scania CV AB, 151 87 Södertälje (SE)
(72) Erfinder: KLEEN, Andro, 47057 Duisburg (DE); GLASER, Erik, San Francisco, California 94123 (US)
(74) Vertreter: Sticht, Andreas
(86) Internationale Anmeldenummer: PCT/EP2014/052645
(87) Internationale Veröffentlichungsnummer: WO 2014/124936

(56) Entgegenhaltungen:
- DE-A1- 19 648 943
- DE-A1- 19 743 024
- DE-A1-102008 034 606

## Beschreibung

Die Erfindung betrifft ein Verfahren und eine Vorrichtung zur Darstellung von Informationen eines Systems, insbesondere eines Kraftfahrzeugs, das mindestens einen Modus zum automatischen Fahren aufweist, sowie ein Computerprogrammprodukt zur Durchführung des Verfahrens.

Aus der US 8 260 482 B1 ist ein Verfahren zur Darstellung von Informationen eines Kraftfahrzeugs bekannt, wobei das Kraftfahrzeug mindestens einen Modus zum automatischen Fahren aufweist. Dabei weist das Kraftfahrzeug mindestens eine Anzeigeeinheit auf, auf der ein Zustand des Systems dargestellt wird. So wird beispielsweise dargestellt, ob das System gegenwärtig überhaupt ein automatisches Fahren gewährleisten kann oder nicht. Des Weiteren wird angezeigt, wenn das Fahrzeug aktuell im Modus automatisch Fahren betrieben wird. Erfasst das System, dass der Fahrer wieder das Fahrzeug übernehmen muss, so wird der Fahrer akustisch oder optisch zur Übernahme aufgefordert. Dabei muss sichergestellt sein, dass der Fahrer die Übernahmeaufforderung erfasst. Dieses Problem stellt sich auch bei Maschinen, die überwacht werden müssen, oder auch in Flugzeugen mit Auto-Pilot. Insbesondere in Situationen, wo der Nutzer sich mit einem mobilen Endgerät beschäftigt (wie beispielsweise einem Smart-Phone oder einem Tablett-PC), ist eine optische Wahrnehmung einer Übernahmeaufforderung nicht mehr gewährleistet.

Die DE 197 43 024 A1 betrifft ein Kraftfahrzeug mit autonomer Fahrzeugführung und elektronischen Kommunikationsmitteln. Bei einem Kraftfahrzeug ist eine Bedieneinrichtung vorgesehen, durch welche die Kommunikationsmittel zwecks Durchführung eines Kommunikationsvorgangs und die Fahrzeugführungsmittel zwecks autonomer Führung des Fahrzeugs aktivierbar sind. Damit wird gewährleistet, dass eine autonome Fahrzeugführung aktiviert werden kann, wenn der Fahrzeugführer die Durchführung eines Kommunikationsvorgangs mit einem elektronischen Kommunikationssystem anfordert bzw. bei aktivierter autonomer Fahrzeugfunktion dem Fahrer der Zugang zu elektronischen Kommunikationssystemen gewährt bzw. ermöglicht wird. Die Fahrzeugführungsmittel sind so ausgelegt, dass sie im aktivierten Zustand rechtzeitig eine erforderlich werdende manuelle Fahrzeugführung erkennen und in diesem Fall eine Übernahmeinformation an die Kommunikationsmittel übermitteln. Letztere zeigen die jeweils empfangene Übernahmeinformation an einer Anzeigeeinrichtung an.

Die DE 10 2008 034606 A1 betrifft eine Darstellung einer Umgebung eines Fahrzeugs auf einer mobilen Einheit, beispielsweise einem Mobiltelefon. Die Umgebung des Fahrzeugs kann auf der mobilen Einheit beispielsweise dargestellt werden, wenn das Fahrzeug eine Parkposition erreicht hat und Insassen über die Umgebung informiert werden sollen oder zur Visualisierung der Bewegung des Fahrzeugs bei einem automatischen bzw. teilautomatischen Steuerungsverfahren, beispielsweise beim Parken oder Rangieren.

Der Erfindung liegt das technische Problem zugrunde, ein Verfahren und eine Vorrichtung zur Darstellung von Informationen eines Systems zur Verfügung zu stellen, bei denen ein Nutzer bei Beschäftigung mit einem mobilen Endgerät dennoch zuverlässig informationstechnisch erreicht wird, sowie ein Computerprogrammprodukt zur Durchführung des Verfahrens zu schaffen.

Die Lösung des technischen Problems ergibt sich durch die Gegenstände mit den Merkmalen der Ansprüche 1, 6 und 7. Weitere vorteilhafte Ausgestaltungen der Erfindung ergeben sich aus den Unteransprüchen.

Das Verfahren zur Darstellung von Informationen eines Systems erfolgt mittels mindestens einer Steuereinheit und einer Anzeigeeinheit, wobei auf der Anzeigeeinheit mindestens eine Information über einen Zustand des Systems dargestellt wird. Weiter weist die Steuereinheit Mittel zur Erfassung eines mobilen Endgeräts im Umkreis des Systems sowie Mittel zum Aufbau eines Kommunikationskanals zwischen der Steuereinheit und dem mobilen Endgerät auf. Die Mittel zur Erfassung des mobilen Endgeräts können dabei beispielsweise als Eingabeeinheit ausgebildet sein, über die das mobile Endgerät bei der Steuereinheit angemeldet wird. Ebenso ist es denkbar, dass die Steuereinheit Mittel aufweist, mittels derer automatisch ein mobiles Endgerät erfasst wird, indem beispielsweise Kommunikationssignale abgehört werden. Die Größe des Umkreises ist dabei abhängig vom System. Ist das System beispielsweise ein Kraftfahrzeug, so kann der Umkreis auf wenige Meter begrenzt sein und beispielsweise zwischen 1 m bis 3 m liegen. Über den Kommunikationskanal wird mindestens eine Information über einen Zustand des Systems an das mobile Endgerät übertragen und auf einer Anzeigeeinheit des mobilen Endgeräts dargestellt. Somit ist sichergestellt, dass auch, wenn der Nutzer sich mit seinem mobilen Endgerät beschäftigt, eine Information über den Systemzustand erhält. Das System ist ein Kraftfahrzeug mit mindestens einem Modus zum automatischen Fahren. Bei Kraftfahrzeugen ohne Modus zum automatischen Fahren dient die Informationswiedergabe dabei primär dem Beifahrer. Die Information zur Darstellung des Zustandes des Systems kann alphanumerisch und/oder piktogrammförmig und/oder durch Farben und/oder durch Bilder erfolgen.

Die Anzeigeeinheit des mobilen Endgeräts wird in mindestens zwei Bereiche unterteilt, wobei in einem ersten Bereich Nutzdaten und in einem zweiten Bereich der Zustand des Systems dargestellt werden. Dies ermöglicht dem Nutzer eine einfache Wahrnehmung und Trennung der verschiedenen Informationen. Dabei sei angemerkt, dass die Unterteilung in zwei Bereiche vorzugsweise nur softwaretechnisch erfolgt, sodass bei einem Betrieb des mobilen Endgeräts außerhalb des Systems die volle Anzeigeeinheit für Nutzdaten zur Verfügung steht.

In einer Ausführungsform ist der zweite Bereich als Rahmen ausgebildet, der den ersten Bereich umrahmt. Somit werden die Nutzdaten des mobilen Endgeräts zentral dargestellt, wobei durch den Rahmen die Informationen über den Zustand des Systems dargestellt werden. Beispielsweise wechselt die Farbe des Rahmens je nach Systemzustand. Alternativ oder zusätzlich können Piktogramme, Bilder oder andere grafische und/oder alphanumerische Anzeigen im Rahmen dargestellt werden. Ist das System beispielsweise ein Kraftfahrzeug mit einem Modus zum automatischen Fahren, so kann beispielsweise ein grüner Rahmen den einwandfreien automatischen Betrieb symbolisieren. Ein gelber Rahmen beispielsweise symbolisiert einen automatischen Betrieb mit schlechten Sensordaten, d.h. eine Übernahme ist noch nicht notwendig, aber bald wahrscheinlich. Ein roter Rahmen symbolisiert beispielsweise, dass eine unmittelbare Übernahme durch den Fahrer notwendig ist.

Das System ist ein Kraftfahrzeug, das mindestens einen Modus zum automatischen Fahren aufweist, wobei bei einem Systemzustand, wo der Kraftfahrzeugführer das Kraftfahrzeug wieder übernehmen soll, die Darstellung von Nutzdaten auf der Anzeigeeinheit des mobilen Endgeräts unterbrochen wird. Hierdurch wird optisch erreicht, dass der Nutzer nicht weiter abgelenkt wird und die Situation schnell erfasst. Die Unterbrechung der Nutzdaten bei dem mobilen Endgerät kann auch bei einem als Flugzeug oder Maschine ausgebildeten System erfolgen.

Ferner wird ein Livestream mindestens einer als Kamera ausgebildeten Umfeldsensorik auf der Anzeigeeinheit des mobilen Endgeräts dargestellt, wenn der Kraftfahrzeugführer zur Übernahme des Kraftfahrzeugs aufgefordert wird. Der Live-Stream stellt eine Verkehrssituation relativ zu dem Kraftfahrzeug dar, welche den Kraftfahrzeugführer bei der Übernahme erwartet. In dem Live-Stream werden relevante Objekte optisch hervorgehoben. Durch den Livestream erhält der Kraftfahrzeugführer bereits einen Eindruck von der Verkehrssituation, die ihn bei der Übernahme erwartet. Weiter vorzugsweise wird der Livestream in dem Bereich der Anzeigeeinheit dargestellt, wo zuvor die Nutzdaten dargestellt wurden.

In einer weiteren Ausführungsform wird die Übernahmeaufforderung in dem Bereich dargestellt, in dem zuvor die Nutzdaten dargestellt werden. Hierdurch ist eine schnellstmögliche Erfassbarkeit durch den Nutzer gewährleistet.

In einer weiteren Ausführungsform erfolgt durch die Steuereinheit eine akustische Übernahmeaufforderung. Vorzugsweise erfolgt diese parallel zu einer optischen Übernahmeaufforderung auf der Anzeigeeinheit des mobilen Endgeräts und der mindestens einen Anzeigeeinheit des Systems. Hierdurch wird sichergestellt, dass der Nutzer die Übernahmeaufforderung auch wahrnimmt, wenn dieser gerade nicht auf die Anzeigeeinheit des mobilen Endgeräts blickt.

In einer weiteren Ausführungsform werden Daten mindestens einer Umfeldsensorik auf der Anzeigeeinheit des mobilen Endgeräts dargestellt. Die Umfeldsensorik kann beispielsweise eine Radarsensorik oder eine Sensorik eines Fahrspurwechselassistenten, beispielsweise in Form einer Kamera, sein. Alternativ oder zusätzlich können auch Umfeldinformationen aus einer Car2x-Kommunikation angezeigt werden. Weiter können auch Daten des eigenen Fahrzeugs angezeigt werden, die über den aktuellen Status und vom System geplante Aktionen informieren. Dies können beispielsweise Lenkwinkelinformationen, Geschwindigkeits- oder Beschleunigungswerte sein.

Dabei sei angemerkt, dass vorzugsweise die Informationen über das System, die auf der Anzeigeeinheit des mobilen Endgeräts dargestellt werden, auch auf der mindestens einen systemseitigen Anzeigeeinheit dargestellt werden, d.h. die Daten werden redundant dargestellt, wobei es nicht zwingend ist, dass die Darstellungsformen identisch sind. Die systemseitige Anzeigeeinheit kann dabei als Kombi-Instrument, Zentraldisplay und/oder als Head-up-Display ausgebildet sein.

Die Vorrichtung zur Darstellung von Informationen eines Systems umfasst mindestens eine Steuereinheit und mindestens eine Anzeigeeinheit, wobei auf der Anzeigeeinheit mindestens eine Information über einen Zustand des Systems dargestellt ist, wobei die Steuereinheit Mittel zur Erfassung eines mobilen Endgeräts im Umkreis des Systems sowie Mittel zum Aufbau eines Kommunikationskanals zwischen der Steuereinheit und dem mobilen Endgerät aufweist, wobei über den Kommunikationskanal mindestens eine Information über einen Zustand des Systems an das mobile Endgerät übertragen wird und auf der Anzeigeeinheit des mobilen Endgeräts dargestellt wird. Die Vorrichtung ist ferner zur Durchführung des zuvor beschriebenen Verfahrens eingerichtet.

Das Computerprogrammprodukt mit Programm-Code, die auf einem computerlesbaren Datenträger gespeichert sind, ist derart ausgebildet, um das zuvor beschriebene Verfahren auszuführen.

Die Erfindung wird nachfolgend anhand eines bevorzugten Ausführungsbeispiels näher erläutert. Die einzige Figur zeigt ein schematisches Blockschaltbild einer Vorrichtung zur Darstellung von Informationen eines Kraftfahrzeugs mit mindestens einem Modus zum automatischen Fahren.

Die Vorrichtung 1 zur Darstellung von Informationen eines Kraftfahrzeugs mit mindestens einem Modus zum automatischen Fahren umfasst mindestens eine Steuereinheit 2 und mindestens eine Anzeigeeinheit 3, wobei auf der Anzeigeeinheit 3 mindestens eine Information über einen Zustand des Kraftfahrzeugs dargestellt wird, insbesondere eine Information über einen Zustand des Kraftfahrzeugs in Bezug auf den Modus zum automatischen Fahren. Die Anzeigeeinheit 3 ist dabei beispielsweise als Kombi-Instrument und/oder als Head-up-Display und/oder als Zentraldisplay ausgebildet. Im einfachsten Fall drückt die Information aus, ob der Modus zum automatischen Fahren aktiv ist oder nicht. Des Weiteren umfasst die Vorrichtung 1 mindestens eine Eingabeeinheit 4, eine akustische Ausgabeeinheit 5, mindestens eine Umfeldsensorik 6 sowie eine Luftschnittstelle 7. Dabei sei angemerkt, dass die Steuereinheit 2 beispielsweise mit weiteren nicht dargestellten Steuergeräten verbunden ist, mittels derer die Funktion des automatischen Fahrens umgesetzt wird.

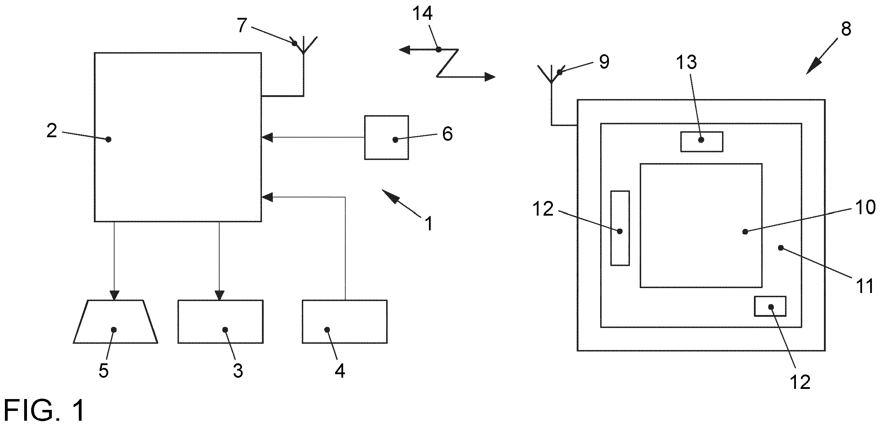

Des Weiteren ist in Fig. 1 ein mobiles Endgerät 8 dargestellt, dass ebenfalls eine Luftschnittstelle 9 aufweist. Das mobile Endgerät 8 weist dabei eine Anzeigeeinheit auf, die in zwei Bereiche unterteilt ist. Dabei dient ein erster Bereich 10 primär zum Darstellen von Nutzdaten und ein zweiter Bereich 11 dient zum Darstellen von Informationen über den Zustand des Kraftfahrzeugs. Dabei ist der zweite Bereich 11 als Rahmen ausgebildet, der um den ersten Bereich 10 herum angeordnet ist. In dem zweiten Bereich 11 werden beispielsweise aufbereitete Daten 12 der Umfeldsensorik und/oder Daten 13 von nicht dargestellten Fahrzeugsensoren wie beispielsweise Lenkwinkelinformationen eines Lenkwinkelsensors dargestellt.

Die Steuereinheit 2 weist Mittel zur Erfassung des mobilen Endgeräts 8 auf. Diese Erfassung kann beispielsweise dadurch erfolgen, dass das mobile Endgerät 8 über die Eingabeeinheit 4 angemeldet wird. Alternativ oder ergänzend kann die Steuereinheit 2 Mittel aufweisen, die eine Inbetriebnahme des mobilen Endgeräts 8 erfassen. Anschließend wird ein Kommunikationskanal 14 aufgebaut, über den mindestens von der Steuereinheit 2 an das mobile Endgerät 8 Daten übertragen werden können. Dargestellt ist, dass der Kommunikationskanal 14 über die Luftschnittstellen 7, 9 erfolgt. Diese Kommunikation kann beispielsweise mittels Infrarot oder im RF-Bereich erfolgen.

Auch ist es denkbar, dass das mobile Endgerät über eine Kabelverbindung an die Fahrzeugelektronik angeschlossen wird, sodass dann die Kommunikation auch über Kabel erfolgen kann.

Dabei sei angenommen, dass es im Modus zum automatischen Fahren drei Zustände geben kann, nämlich "automatisches Fahren, alle Systeme arbeiten einwandfrei", "automatisches Fahren, mit eingeschränkter Systemqualität" und "Übernahme durch den Kraftfahrzeugführer erforderlich". Die drei Zustände können beispielsweise durch eine alphanumerische Anzeige und/oder eine Farbe (z.B. Grün, Gelb, Rot) dargestellt werden. Sei nun angenommen, dass der Kraftfahrzeugführer den Modus für das automatische Fahren aktiviert hat und alle Systeme arbeiten einwandfrei, so überträgt die Steuereinheit 2 diesen Zustand an das mobile Endgerät 8. Zur Darstellung dieses Zustands wird beispielsweise der zweite Bereich 11 grün dargestellt. Im ersten Bereich 10 kann hingegen der Kraftfahrzeugführer sich Nutzdaten wie beispielsweise einen Film anschauen. Durch den gefärbten zweiten Bereich 11 sowie den darin dargestellten Daten 12, 13 wird der Kraftfahrzeugführer erinnert, dass das Kraftfahrzeug sich in einem Modus automatisches Fahren befindet. Dies bewirkt eine gewisse Wachsamkeit, damit dieser bedarfsweise schnell das Kraftfahrzeug übernehmen kann. Lässt dann beispielsweise die Qualität der Sensordaten nach, erhöht sich die Wahrscheinlichkeit, dass der Kraftfahrzeugführer das Kraftfahrzeug bald wieder übernehmen muss. Dies kann dann durch eine Gelbfärbung des zweiten Bereichs 11 dargestellt werden. Durch die Gelbfärbung wird dabei die Aufmerksamkeit des Kraftfahrzeugführers erhöht. Ist dann eine sofortige bzw. eine Übernahme in einer gewissen Zeit notwendig, so wird der zweite Bereich 11 rot gefärbt. Vorzugsweise wird die Wiedergabe der Nutzdaten unterbrochen und eine alphanumerische Übernahmeaufforderung im ersten Bereich eingeblendet. Parallel erfolgt eine akustische Übernahmeaufforderung durch Ausgabe entsprechender Warnungen über die akustische Ausgabeeinheit 5. Schließlich kann auch ein Livestream einer als Kamera ausgebildeten Umfeldsensorik 6 auf dem ersten Bereich 10 dargestellt werden, sodass der Kraftfahrzeugführer unmittelbar einen Eindruck von dem Verkehrsgeschehen hat. Die Daten 12 werden dabei vorzugsweise derart dargestellt, dass diese bereits einen Hinweis auf die relative Position zum eigenen Kraftfahrzeug geben. So können beispielsweise Fahrzeuge, die sich rechts hinter dem eigenen Fahrzeug befinden, im unteren rechten des zweiten Bereichs 11 dargestellt werden. Auch ist es möglich, besonders relevante Objekte im Livestream optisch hervorzuheben.

Weiterhin sind Informationen über Platooning-Einheiten denkbar. Platooning bezeichnet ein Konzept des automatischen Fahrens im Verband, insbesondere für schwere Nutzfahrzeuge.

Durch enge Verbände und den dadurch geringen Luftwiderstand soll eine höhere Kraftstoffeffizienz erreicht werden. Durch entsprechende Symbole innerhalb des zweiten Bereichs kann angezeigt werden, dass dieser Modus weiterhin aktiv ist oder innerhalb einer bestimmten Zeitspanne aufgehoben werden muss (z.B. aufgrund abweichender Routen).

## Patentansprüche

1. Verfahren zur Darstellung von Informationen eines Systems, mittels mindestens einer Steuereinheit (2) und einer Anzeigeeinheit (3), wobei auf der Anzeigeeinheit (3) mindestens eine Information über einen Zustand des Systems dargestellt wird,
wobei die Steuereinheit (2) Mittel zur Erfassung eines mobilen Endgeräts (8) im Umkreis des Systems sowie Mittel zum Aufbau eines Kommunikationskanals (14) zwischen der Steuereinheit (2) und dem mobilen Endgerät (8) aufweist, wobei über den Kommunikationskanal (14) mindestens eine Information über einen Zustand des Systems an das mobile Endgerät (8) übertragen wird und auf einer Anzeigeeinheit des mobilen Endgeräts (8) dargestellt wird,
wobei die Anzeigeeinheit des mobilen Endgeräts (8) in mindestens zwei Bereiche unterteilt ist, wobei in einem ersten Bereich (10) Nutzdaten und in einem zweiten Bereich (11) der Zustand des Systems dargestellt werden,
wobei das System ein Kraftfahrzeug ist, das mindestens einen Modus zum automatischen Fahren aufweist,
wobei bei einem Systemzustand, wo der Kraftfahrzeugführer das Kraftfahrzeug wieder übernehmen soll, die Darstellung von Nutzdaten auf der Anzeigeeinheit des mobilen Endgeräts (8) unterbrochen wird und ein Live-Stream mindestens einer als Kamera ausgebildeten Umfeldsensorik (6) des Kraftfahrzeugs auf der Anzeigeeinheit des mobilen Endgeräts (8) dargestellt wird, wobei der Live-Stream eine Verkehrssituation relativ zu dem Kraftfahrzeug darstellt, welche den Kraftfahrzeugführer bei der Übernahme erwartet, und in dem Live-Stream relevante Objekte optisch hervorgehoben werden.

2. Verfahren nach Anspruch 1, **dadurch gekennzeichnet, dass** der zweite Bereich (11) als Rahmen ausgebildet ist, der den ersten Bereich (10) umrahmt.

3. Verfahren nach Anspruch 1 oder Anspruch 2, **dadurch gekennzeichnet, dass** die Übernahmeaufforderung in dem Bereich (10) dargestellt wird, in dem zuvor die Nutzdaten dargestellt wurden.

4. Verfahren nach einem der Ansprüche 1 bis 3, **dadurch gekennzeichnet, dass** eine akustische Übernahmeaufforderung durch die Steuereinheit (2) erfolgt.

5. Verfahren nach einem der Ansprüche 1 bis 4, **dadurch gekennzeichnet, dass** Daten mindestens einer Umfeldsensorik (6) auf der Anzeigeeinheit des mobilen Endgeräts (8) dargestellt werden.

6. Vorrichtung zur Darstellung von Informationen eines Systems, umfassend mindestens eine Steuereinheit (2) und eine Anzeigeeinheit (3), wobei die Anzeigeeinheit (3) dazu eingerichtet ist, mindestens eine Information über einen Zustand des Systems darzustellen,
wobei die Steuereinheit (2) Mittel, die zur Erfassung eines mobilen Endgeräts (8) im Umkreis des Systems eingerichtet sind, sowie Mittel, die zum Aufbau eines Kommunikationskanals (14) zwischen der Steuereinheit (2) und dem mobilen Endgerät (8) eingerichtet sind, aufweist, wobei über den Kommunikationskanal (14) mindestens eine Information über einen Zustand des Systems an das mobile Endgerät (8) übertragen wird und auf der Anzeigeeinheit des mobilen Endgeräts (8) dargestellt wird,
wobei die Anzeigeeinheit des mobilen Endgeräts (8) in mindestens zwei Bereiche unterteilt ist, wobei in einem ersten Bereich (10) Nutzdaten und in einem zweiten Bereich (11) der Zustand des Systems dargestellt werden,
wobei das System ein Kraftfahrzeug ist, das mindestens einen Modus zum automatischen Fahren aufweist,
wobei bei einem Systemzustand, wo der Kraftfahrzeugführer das Kraftfahrzeug wieder übernehmen soll, die Darstellung von Nutzdaten auf der Anzeigeeinheit des mobilen Endgeräts (8) unterbrochen wird und ein Live-Stream mindestens einer als Kamera ausgebildeten Umfeldsensorik (6) des Kraftfahrzeugs auf der Anzeigeeinheit des mobilen Endgeräts (8) dargestellt wird, wobei der Live-Stream eine Verkehrssituation relativ zu dem Kraftfahrzeug darstellt, welche den Kraftfahrzeugführer bei der Übernahme erwartet, und in dem Live-Stream relevante Objekte optisch hervorgehoben werden.

7. Computerprogrammprodukt mit Programm-Code, die auf einem computerlesbaren Datenträger gespeichert sind, um das Verfahren nach einem der Ansprüche 1 bis 5 durchzuführen.

## Claims

1. A method for displaying information of a system by means of at least one control unit (2) and a display unit (3), wherein at least one information item about a state of the system is displayed on the display unit (3),
wherein the control unit (2) has means for detecting a mobile terminal (8) in the vicinity of the system and means for establishing a communication channel (14) between the control unit (2) and the mobile terminal (8), wherein at least one information item about a state of the system is transmitted to the mobile terminal (8) via the communication channel (14) and is displayed on a display unit of the mobile terminal (8),
wherein the display unit of the mobile terminal (8) is divided into at least two regions, wherein useful data is displayed in a first region (10) and the state of the system is displayed in a second region (11),
wherein the system is a motor vehicle having at least one automatic driving mode,
wherein, in the case of a system state where the motor vehicle driver is to resume control of the motor vehicle, the representation of useful data is interrupted on the display unit of the mobile terminal (8), and a live stream of at least one environment sensor system (6) of the motor vehicle designed as a camera is displayed on the display unit of the mobile terminal (8), wherein the live stream represents a traffic situation relative to the motor vehicle, which live stream waits for the motor vehicle operator when the latter resumes control and objects that are relevant in the live stream are visually highlighted.

2. The method according to claim 1, **characterized in that** the second region (11) is formed as a frame that borders the first region (10).

3. Method according to claim 1 or claim 2, **characterized in that** the prompt to assume control is displayed in the region (10) in which the useful data were previously displayed.

4. The method according to claims 1 to 3, **characterized in that** an acoustic prompt to assume control is performed by the control unit (2).

5. The method according to claims 1 to 4, **characterized in that** data of at least one environment sensor system (6) is displayed on the display unit of the mobile terminal (8).

6. A device for displaying information of a system, comprising at least one control unit (2) and a display unit (3), wherein the display unit (3) is configured to display at least one information item about a state of the system,
wherein the control unit (2) has means that are configured to detect a mobile terminal (8) in the vicinity of the system, and means that are configured to establish a communication channel (14) between the control unit (2) and the mobile terminal (8), wherein at least one information item about a state of the system is transmitted to the mobile terminal (8) via the communication channel (14) and is displayed on the display unit of the mobile terminal (8),
wherein the display unit of the mobile terminal (8) is divided into at least two regions, wherein useful data is displayed in a first region (10) and the state of the system is displayed in a second region (11),
wherein the system is a motor vehicle having at least one automatic driving mode,
wherein, in the case of a system state where the motor vehicle driver is to resume control of the motor vehicle, the representation of useful data is interrupted on the display unit of the mobile terminal (8), and a live stream of at least one environment sensor system (6) of the motor vehicle designed as a camera is displayed on the display unit of the mobile terminal (8), wherein the live stream represents a traffic situation relative to the motor vehicle, which live stream waits for the motor vehicle operator when the latter resumes control and objects that are relevant in the live stream are visually highlighted.

7. A computer program product having program code stored on a computer-readable data storage medium to carry out the method according to any of claims 1 to 5.

## Revendications

1. Procédé pour la représentation d'informations d'un système, au moyen d'au moins une unité de commande (2) et d'une unité d'affichage (3), au moins une information concernant un état du système étant représentée sur l'unité d'affichage (3),
l'unité de commande (2) présentant des moyens pour la détecter un terminal mobile (8) dans les environs du système et des moyens pour établir un canal de communication (14) entre l'unité de commande (2) et le terminal mobile (8), au moins une information concernant un état du système étant transmise au terminal mobile (8) par le canal de communication (14) et étant représentée sur une unité d'affichage du terminal mobile (8),
l'unité d'affichage du dispositif terminal mobile (8) étant divisée en au moins deux zones, des données utiles étant représentées dans une première zone (10) et l'état du système étant représenté dans une deuxième zone (11),
le système étant un véhicule automobile qui présente au moins un mode de conduite automatique,
pour un état du système, dans lequel le conducteur du véhicule automobile soit reprendre le contrôle du véhicule automobile, la représentation de données utiles sur l'unité d'affichage du terminal mobile (8) étant interrompue et un flux en direct d'au moins un capteur d'environnement (6) du véhicule automobile, réalisé sous forme de caméra, étant représenté sur l'unité d'affichage du terminal mobile (8), le flux en direct représentant une situation de trafic par rapport au véhicule automobile, laquelle attend le conducteur du véhicule automobile lors de la prise de contrôle, et des objets pertinents étant mis en évidence visuellement dans le flux en direct.

2. Procédé selon la revendication 1, **caractérisé en ce que** la deuxième zone (11) est réalisée sous la forme d'un cadre, lequel encadre la première zone (10).

3. Procédé selon la revendication 1 ou la revendication 2, **caractérisé en ce que** la demande de reprise de contrôle est représentée dans la zone (10) dans laquelle les données utiles ont été représentées précédemment.

4. Procédé selon l'une quelconque des revendications 1 à 3, **caractérisé en ce qu'**une demande de reprise de contrôle acoustique est effectuée par l'unité de commande (2).

5. Procédé selon l'une quelconque des revendications 1 à 4, **caractérisé en ce que** les données d'au moins un capteur d'environnement (6) sont représentées sur l'unité d'affichage du terminal mobile (8)

6. Dispositif pour la représentation d'informations d'un système, comprenant au moins une unité de commande (2) et une unité d'affichage (3), l'au moins une unité d'affichage (3) étant conçue pour représenter au moins une information concernant un état du système,
l'unité de commande (2) présentant des moyens qui sont conçus pour la détection d'un terminal mobile (8) dans les environs du système ainsi que des moyens qui sont conçus pour l'établissement d'un canal de communication (14) entre l'unité de commande (2) et le terminal mobile (8), au moins une information concernant un état du système étant transmise au terminal mobile (8) par le canal de communication (14) et étant représentée sur l'unité d'affichage du terminal mobile (8),
l'unité d'affichage du dispositif terminal mobile (8) étant divisée en au moins deux zones, des données utiles étant représentées dans une première zone (10) et l'état du système étant représenté dans une deuxième zone (11),
le système étant un véhicule automobile qui présente au moins un mode de conduite automatique,
pour un état du système, dans lequel le conducteur du véhicule automobile soit reprendre le contrôle du véhicule automobile, la représentation de données utiles sur l'unité d'affichage du terminal mobile (8) étant interrompue et un flux en direct d'au moins un capteur d'environnement (6) du véhicule automobile, réalisé sous forme de caméra, étant représenté sur l'unité d'affichage du terminal mobile (8), le flux en direct représentant une situation de trafic par rapport au véhicule automobile, laquelle attend le conducteur du véhicule automobile lors de la prise de contrôle, et des objets pertinents étant mis en évidence visuellement dans le flux en direct.

7. Produit de programme informatique comprenant un code de programme, lequel est enregistré sur un support de données lisible par ordinateur, pour exécuter le procédé selon l'une quelconque des revendications 1 à 5.
